# EUROPEAN PATENT APPLICATION

(11) **EP 1 088 794 A2**
(43) Date of publication of application: **04.04.2001**
(21) Application number: 00119340.8
(22) Date of filing: 07.09.2000
(51) Int. Cl.: C02F 5/10

(54) **Polymers containing styrene and unsaturated polycarboxylates as monomers for high stressed water treatment application**

(30) Priority: 29.09.1999 US 407443
(71) Applicant: National Starch and Chemical Investment Holding Corporation, Wilmington, Delaware 19803-7663 (US)
(72) Inventor: Austin, Anne B., Signal Mountain, Tennessee 37377 (US); Montague, Peter G., Signal Mountain, Tennessee 37377 (US); Weidner, Ivonne C., Chattanooga, Tennessee 37343 (US); Ward, Eric C., Chattanooga, Tennessee 37415 (US)
(74) Representative: Held, Stephan, Dr.rer.nat., Dipl.-Chem.

(57) **Abstract**

A method for inhibiting scale formation in wholly or partly aqueous systems under stressed conditions characterized by a Langelier Saturation Index value of greater than 2.5, or a Ryznar Stability Index value of less than 4.5, said method comprising adding to the aqueous system a styrene polycarboxylate, said styrene polycarboxylate is prepared by solution polymerizing: (i) 1 to 60 mole percent of a monomer selected from the group consisting of styrene, substituted-styrene and combinations thereof, (ii) 20 to 80 mole percent of a monocarboxylic acid monomer, and (iii) 30 to 80 mole percent of a dicarboxylic acid monomer, in the presence of a water-miscible solvent to form a styrene polycarboxylate solution containing acid moieties, wherein the mole percents are based on the total moles of monomer used to prepare the styrene polycarboxylate. The styrene polycarboxylates of the invention inhibit scale formation, and/or inhibit corrosion of metals, and/or facilitate dispersion of particulate matter, in aqueous systems.

## Description

This invention relates to the use of styrene containing polycarboxylates as scale inhibitors in aqueous systems under stressed conditions at a pH of at least 7.

The majority of natural waters and aqueous systems contain dissolved salts of metals such as calcium, magnesium, barium and strontium. When the water or aqueous system is subjected to heating, the dissolved salts may be converted to insoluble salts and deposited as scale on heat transfer surfaces in contact with the aqueous system. If the aqueous system is concentrated even without heating, insoluble salts may also be precipitated.

Scale precipitation and scale deposition are troublesome and can cause increased costs in maintaining aqueous systems in good working order. Among the problems caused by scale deposits are obstruction of fluid flow, impedance of heat transfer, wear of metal parts, shortening of equipment life, localized corrosion attack, poor corrosion inhibitor performance, and unscheduled equipment shutdown. These problems can arise, for example, in water of oil wells, water pipes, steam power plants, water desalination plants, reverse osmosis equipment utilizing aqueous solutions, and heat exchange equipment. The problems with scale deposition are compounded when the aqueous systems are placed under "high stress" conditions of high temperatures, high pH conditions, and high levels of dissolved or suspended salts of metals.

One method used to overcome the disadvantages associated with scale formation has involved the dismantling of equipment to enable the accumulated deposits to be cleaned out. This procedure is costly and does not prevent scale redeposition. Another method involves the use of strong alkali solution for the removal of, in particular, sulfate scale. Under suitable conditions of temperature and time the alkali treatment eventually provides an initial break up of the scale, which can then be removed by mechanical means. Such a method requires considerable time and the removal of scale subsequent to treatment is often difficult.

Traditionally, polymaleic acid polymers are used to inhibit calcium deposition in aqueous systems under "stressed conditions". However, such polymaleics are more costly due to the multiple step solvent processes necessary for their preparation. In addition, polymaleic acid polymers are ineffective at dispersing mineral scale and particulate matter. Polymers prepared with less than 100% maleic acid have been shown to be less effective as calcium inhibitors, but are more effective at dispersing mineral scale and particulate matter. This can be attributed, at least partially, to the molecular weight of lower maleic acid containing polymers which is significantly greater than polymaleic acid polymers.

U.S. Patent Nos. 5,650,473; 5,789,511; and 5,886,076 describe methods for making styrene copolymers which are useful in cleaning compositions. The methods involve polymerization, followed by a neutralization, and then distillation.

There is a need for a composition which is effective in aqueous systems in very small quantities and which can reduce the rate at which insoluble salts are precipitated and also disperse mineral scale and particulate matter which may be precipitated, even when the aqueous systems are placed under "stressed conditions".

According to the present invention there is provided a method for inhibiting scale formation in wholly or partly aqueous systems under stressed conditions characterized by a Langelier Saturation Index value of greater than 2.5, or a Ryznar Stability Index value of less than 4.5, said method comprising adding to the aqueous system a styrene polycarboxylate, said styrene polycarboxylate is prepared by solution polymerizing: (i) 1 to 60 mole percent of a monomer selected from the group consisting of styrene, substituted-styrene and combinations thereof, (ii) 20 to 80 mole percent of a monocarboxylic acid monomer, and (iii) 30 to 80 mole percent of a dicarboxylic acid monomer, in the presence of a water-miscible solvent to form a styrene polycarboxylate solution containing acid moieties, wherein the mole percents are based on the total moles of monomer used to prepare the styrene polycarboxylate.

The styrene polycarboxylates of the invention inhibit scale formation, and/or inhibit corrosion of metals, and/or facilitate dispersion of mineral scale and particulate matter, in wholly or partly aqueous systems under stressed conditions at a pH of at least 7. Applicants have determined that the styrene polycarboxylates of the invention have low molecular weights, similar to commercially available polymaleic acid polymers which have been shown to inhibit scale formation.

While not wishing to be bound by any particular theory, the inventors believe that the styrene or substituted-styrene in the backbone of the styrene polycarboxylate acts as a spacer between the carboxylic acid groups and provides hydrophobic properties to the styrene polycarboxylate polymer which facilitates the polymers ability to inhibit scale formation in aqueous systems under stressed conditions.

The present invention relates to a method for treating wholly or partly aqueous systems under stressed conditions at a pH of at least 7, preferably at least 9, more preferably at least 10, in order to inhibit scale formation. As used herein, "stressed conditions" means aqueous systems having a pH of at least 7, and high levels of dissolved or suspended salts of metals, such as calcium, magnesium, barium and strontium.

Stressed conditions may also be explained in terms of Scaling Indices such as the Langelier Saturation Index (LSI) and the Ryznar Stability Index (RSI). A Langelier Saturation Index value of greater than 2.5, or a Ryznar Stability Index value of less than 4.5, indicate stressed conditions in the aqueous system. These indices are defined as follows: Langelier Saturation Index = pH - pHs, wherein pH is the actual measured value in the water, and pHs is the pH of saturation, according to W.F. Langelier, J. Am. Water Works Assoc., Vol. 28, 1936, p1500, which is incorporated herein by reference. Ryznar Stability Index = 2pHs - pH wherein pH is the actual measured value in the water, and pHs is the pH of saturation, according to J.W. Ryznar, J. Am. Water Works Assoc. Vol. 36 (No.4) 1944, p 472, which is incorporated herein by reference.

The method of the invention involves adding to the aqueous system a styrene polycarboxylate. The styrene polycarboxylate is prepared by a solution polymerization method. The polymerization method involves reacting styrene and/or substituted-styrene with at least one monocarboxylic acid monomer and at least one dicarboxylic acid monomer in the presence of a water-miscible solvent to form a styrene polycarboxylate solution containing acid moieties. The dicarboxylic acid is placed directly into the initial reactor charge, and at least a portion of the acid moieties are neutralized to increase reactivity of the dicarboxylic acid during the polymerization. Suitable substituted styrenes are 3-methyl styrene, 4-propyl styrene, t-butyl styrene, 4-cyclohexyl styrene, 4-dodecyl styrene, 2-ethyl-4-benzyl styrene, 4-(phenylbutyl) styrene, 3-isopropenyl-α, α-dimethylbenzyl isocyanate, halogenated styrenes, sulfonated styrene, and vinyl toluene.

The monocarboxylic acid monomer and dicarboxylic acid monomer are selected from ethylenically unsaturated monomers having one and two carboxyl groups, respectively. Specific examples of monocarboxylic acids and dicarboxylic acids are acrylic acid, methacrylic acid, maleic acid, maleic anhydride, itaconic anhydride, fumaric acid. A preferred monocarboxylic acid is acrylic acid. A preferred dicarboxylic acid is maleic acid. A combination of monocarboxylic acids and dicarboxylic acids may be used.

While not wishing to be bound by any particular theory, the inventors believe that the styrene or substituted-styrene in the backbone of the styrene polycarboxylate acts as a spacer between the carboxylic acid groups and provides hydrophobic properties to the styrene polycarboxylate polymer which facilitates the polymers ability to inhibit scale formation in aqueous systems under stressed conditions.

The amount of styrene or substituted-styrene monomer used to prepare the styrene polycarboxylate is from 1 to 60 mole percent, preferably 2 to 40 mole percent, more preferably 5 to 10 mole percent, based on the total moles of monomer. The amount of monocarboxylic acid used to prepare the styrene polycarboxylate is from 20 to 80 mole percent, preferably from 40 to 70 mole percent, more preferably from 30 to 45 mole percent. The amount of dicarboxylic acid monomer used to prepare the styrene polycarboxylate is from 30 to 80 mole percent, preferably from 35 to 75 mole percent, more preferably from 40 to 60 mole percent. The mole percents are based on the total moles of monomer used to prepare the styrene polycarboxylate.

It is within the scope of the invention to prepare the styrene polycarboxylate with an ethylenically unsaturated monomer other than styrene, substituted-styrene, a monocarboxylic acid or a dicarboxylic acid. Examples of such optional monomers include, but are not limited to, vinyl acetate, vinyl formate, vinyl propionate, vinyl butyrate, vinyl isobutyrate, vinyl valerate, vinyl 2-ethyl-hexanoate, vinyl isooctanoate, vinyl nonanoate, vinyl decanoate, vinyl pivalate, and vinyl versatate, methyl acrylate, methyl methacrylate, ethyl acrylate, ethyl methacrylate, propyl acrylate, butyl acrylate, pentyl acrylate, hexyl acrylate, and 2-ethyl hexyl acrylate, 1-vinyl naphthalene, 2-vinyl naphthalene, acrylamide, N, N-dimethylacrylamide, N-octyl acrylamide, N-methylol acrylamide, dimethylaminoethylacrylate, vinyl pyrrolidone, vinyl imidazolidone, vinyl pyridine, 2-acrylamido-2-methyl propane sulfonic acid, sodium methallyl sufonate, sodium vinyl sulfonate, sulfonated sytrene, N-vinyl formamide, and N-vinyl acetamide. A combination of optional monomers may also be used to prepare the styrene polycarboxylate.

The solution polymerization is conducted with one or more water-miscible solvents. Suitable solvents include water; low molecular weight alcohols, such as methanol, ethanol, propanol, isopropanol; ethers such as dimethyl ether; esters such as ethyl acetate; and other water-miscible solvents, such as acetone and methyl ethyl ketone. A combination of such solvents may also be used to prepare the styrene polycarboxylate. Preferably, the solution polymerization is conducted in a mixture of isopropanol and water.

The water-miscible solvent may be removed from the styrene polycarboxylate polymer solution. Methods used to remove the water-miscible solvent are known in the art, such as distillation or vacuum filtration. In one embodiment, caustic is added to the styrene polycarboxylate in order to facilitate polymer solubility.

The following nonlimiting examples illustrate further aspects of the invention.

### EXAMPLE 1

### Preparation of styrene polycarboxylate.

An initial charge of tap water, 120 g, and maleic anhydride, 88.2 g, were added to a 500 ml glass reactor complete with agitator, temperature probe, and water cooled condenser. The maleic anhydride/water initial charge was agitated, and sodium hydroxide solution, 50% (43.2 g) was added to partially neutralize the maleic acid (hydrolyzed maleic anhydride). Isopropyl alcohol, 45 g, and the metal ion reductant, ferrous ammonium sulfate, 15 ppm, were added.

At reflux, approximately 86°C, a mixed monomer solution of acrylic acid, 32.4 g, and styrene, 15.6 g, and an initiator solution of sodium persulfate, 4.1 g, and hydrogen peroxide, 70 g of a 35% solution, were added over a 5 hour slow-added period.

At the end of the slow additions, ascorbic acid was added to reduce residual unreacted monomers. The reaction mixture was cooked for 30 minutes, then the alcohol/water mixture was removed by azeotropic distillation. No pH adjustments were made to the final polymer solution, which was a pale yellow, clear to slightly hazy product of 45% total solids content. The styrene polycarboxylate composition is summarized in Table I, and the molecular weight is listed in Table II.

### EXAMPLES 2-18

### Preparation of styrene polycarboxylates.

Styrene polycarboxylates were prepared from different mole percents of at least two of the following monomers: maleic acid, acrylic acid, styrene, methylmethacrylate, hydroxypropyl acrylate, and sodium methallyl sulfonate, according to the procedure set forth in Example 1. The styrene polycarboxylate compositions are summarized in Table 1. The molecular weights are listed in Table II.

### EXAMPLE 19

A polymaleic acid was prepared in xylene. The polymaleic acid composition is summarized in Table I, and the molecular weight is listed in Table II.

### EXAMPLE 20

A copolymer was prepared from maleic acid, acrylic acid, and vinyl acetate. The copolymer composition is summarized in Table I.

**TABLE I**

| Copolymer Compositions Prepared in Examples 1-20. | |
|---|---|
| Polymer | Composition (mole%) |
| Example 1 | Maleic:Acrylic:Styrene 60:30:10 |
| Example 2 | Maleic:Acrylic:Styrene 60:32:8 |
| Example 3 | Maleic:Acrylic:Styrene 60:28:12 |
| Example 4 | Maleic:Acrylic:Styrene 50:45:5 |
| Example 5 | Maleic:Acrylic:Styrene:SMS 40:52:8:<2wt.% |
| Example 6 | Maleic:Acrylic:Styrene 50:40:10 |
| Example 7 | Maleic:Acrylic:Styrene 55:35:10 |
| Example 8 | Maleic:Acrylic:Styrene:SMS 50:40:10:<2wt.% |
| Example 9 | Maleic:Acrylic:Styrene:MMA 55:35:10:<2wt.% |
| Example 10 | Maleic:Acrylic:Styrene:SMS 55:37:8:<2wt.% |
| Example 11 | Maleic:Acrylic:Styrene 60:30:10 |
| Example 12 | Maleic:Acrylic:Styrene 60:20:20 |
| Example 13 | Maleic:Styrene 50:50 |
| Example 14 | Maleic:Acrylic:Styrene:HPA 65:28:2:5 |
| Example 15 | Maleic:Acrylic:Styrene:MMA 65:29:3:3 |
| Example 16 | Maleic:Acrylic:Styrene 85:15:<2wt% |
| Example 17 | Maleic:Acrylic:Styrene 65:30:5 |
| Example 18 | Maleic:Acrylic:Styrene 70:25:5 |
| Example 19 | Maleic:100 |
| Example 20 | Maleic:Acrylic:vinyl acetate 65:32:3 |
| MMA is methylmethacrylate. HPA is hydroxypropyl acrylate. SMS is sodium methallyl sulfonate. | |

**TABLE II**

| Polymer | Molecular Weight (Mw) |
|---|---|
| Example 1 | 1013 |
| Example 2 | 652 |
| Example 3 | 635 |
| Example 11 | 780 |
| Example 12 | 690 |
| Example 14 | 496 |
| Example 15 | 820 |
| Example 16 | 740 |
| Example 17 | 854 |
| Example 18 | 627 |
| Example 19 | 425 |

The molecular weight data in Table II clearly shows that the molecular weights of the styrene polycarboxylates of the invention are similar to the molecular weight of the commercially available polymaleic (Example 19).

### EXAMPLE 21

### Evaluation of polymers in Stressed Calcium Carbonate Test.

This test is designed to evaluate antiscalents for calcium carbonate stabilization in high pH and high electrolyte conditions. The test quantitatively compares antiscalent effects on calcium carbonate threshold inhibition, dispersency, and surface adhesion.

For the preparation of test samples 50 ml of Na₂CO₃ solution is pipeted into a 250 ml Erlenmeyer flask. Using a serological pipet, the polymer is added to each of the samples. Simultaneously, 50 ml of a NaCl/NaOH solution and 100 ml of a CaCl₂.2H₂O solution were pipeted into each sample. A sample without polymer was also prepared. The pH of each sample was determined to be within the range of 12.3 to 12.7 (Langelier Saturation Index = 6, Ryznar Stability Index = 1.

The polymers were individually placed in glass jars at a solids content of 50%. Triplicates of the samples were placed in a water bath for set at 50°C for 40 hours. Each sample was split into a filtrate, an adherent, and a membrane. The samples were removed from the water bath and allowed to equilibrate to room temperature.

Samples were divided into three parts to measure effects of polymer treatment on calcium carbonate solution properties: (1) filtrate aliquot, (2) membrane aliquot and (3) adherent aliquot. "Filtrate" aliquots contained calcium stabilized (inhibited) by the copolymers. This is representative of the "threshold effect" of the copolymer. "Membrane" aliquots contained solid material collected on a filter membrane. This is representative of "dispersing effect" of the copolymers. "Adherent" aliquots contained material which had been attached to the surface of the sample flasks. This is representative of the effect of the copolymer on the "adhesive" properties of formed crystals.

To prepare the "adherent" aliquot, 50 mls of 14% nitric acid was poured into the sample flask and swirled to dissolve crystals. The contents of the sample flask were transferred into a 100 ml volumetric flask and the sample flask was rinsed with 30 mls of deionized water while transferring into the volumetric flask. A total of 1 ml of 12% KCL was added to the volumetric flask and it was filled to the mark with deionized water.

To prepare the "membrane" aliquot, the filtration apparatus was transferred to another side-arm flask and 50 mls of 14% nitric acid was slowly poured through the filter membrane, and the membrane was rinsed with 20 mls of deionized water. The contents of the filtration flask containing the "membrane" aliquat were transferred into a 100 ml volumetric flask. The flask was rinsed with about 20 mls of deionized water while transferring into the volumetric flask, 1 ml of 12% KCL was added to the volumetric and it was filled to volume with deionized water. Samples were analyzed by flame atomic absorption spectrophotometry on a Perkin Elmer Model 5100 Atomic Absorption Spectrophotometer. There was a total of 16 mg of calcium initially present in each sample. The test results are summarized in Table III.

**TABLE III**

| Evaluation of polymers in Stressed Calcium Carbonate Test | | | | |
|---|---|---|---|---|
| Polymer Polymer | Dosage (mg/L) | Average % Soluble Calcium (filtrate) | Average % Suspended CaCO₃ (membrane) | Average % Adherent CaCO₃ (adherent) |
| Example 1 | 24 | 84.4 | 7.4 | 8.1 |
| | 30 | 94.6 | 3.3 | 2.2 |
| Example 2 | 24 | 94.5 | 3.5 | 2.0 |
| | 30 | 85.7 | 7.3 | 7.0 |
| Example 3 | 24 | 31.3 | 9.2 | 59.5 |
| | 30 | 38.5 | 4.4 | 57.2 |
| Example 4 | 24 | 88.3 | 10.1 | 1.5 |
| | 30 | 83.2 | 11.0 | 5.8 |
| Example 5 | 24 | 92.5 | 3.5 | 4.0 |
| | 30 | 98.8 | 2.3 | -1.2 |
| Example 6 | 24 | 58.1 | 15.5 | 26.4 |
| | 30 | 85.2 | 9.1 | 5.7 |
| Example 7 | 24 | 68.7 | 10.6 | 20.7 |
| | 30 | 89.3 | 2.7 | 8.0 |
| Example 8 | 24 | 89.7 | 5.3 | 5.0 |
| | 30 | 82.8 | 8.1 | 9.1 |
| Example 9 | 24 | 40.6 | 12.4 | 46.9 |
| | 30 | 76.3 | 3.9 | 19.7 |
| Example 10 | 24 | 70.8 | 11.1 | 18.1 |
| | 30 | 80.9 | 9.2 | 9.9 |
| Example 11 | 24 | 6.0 | 13.0 | 81.1 |
| | 30 | 16.2 | 1.8 | 82.0 |
| Example 20 | 24 | 63.2 | 22.2 | 14.6 |
| | 30 | 74.5 | 17.5 | 8.0 |

The results in Table III show that the styrene polycarboxylates of the invention outperformed the polycarboxylate polymer of Example 20 that was prepared without styrene.

In interpreting the data of Table III, it is noted that the critical parameter is the percent adherent, i.e., the level of calcium carbonate which would adhere to the particular substrate of interest. The percent adherent should be as low as possible. It is preferred that the percent calcium carbonate in the filtrate be as high as possible to provide for efficient removal of calcium from the system before the calcium carbonate crystals are formed. However, the amount of calcium in the filtrate may be lower, provided that at the same time the percent calcium carbonate crystals retained on the membrane is higher, indicating greater dispersancy of formed crystals. The dispersed crystals may be removed via conventional means, which would be apparent to one skilled in the art of water treatment.

### EXAMPLE 22

### Evaluation of Polymers in Dynamic Screening Shaker Test.

Polymers were tested using water conditions identical to those used in a dynamic system; polymer treatment dosages were at 20ppm. Test water conditions were at 50°C and pH = 8.75-8.85. The ionic concentrations of one cycle of concentration are approximately 100ppm Ca as calcium, 30ppm Mg as magnesium, 300ppm HCO₃ and 100ppm CO₃. Results are given as percent inhibition per cycle of concentration. As the concentrations are increased, scaling tendencies also increase until failure occurs and scale begins to form in the system. Specifically, failure is considered to be the point when the treatment is no longer capable of keeping more than 90% of the calcium present in solution (less than 90% calcium inhibition). The test results are summarized in Table IV.

**TABLE IV**

| Evaluation of Polymers in Dynamic Screening Shaker Test | |
|---|---|
| Polymer | Percent Calcium Inhibition vs. Polymaleic Acid |
| Example 19 | 100 |
| Example 17 | 93.7 |
| Example 17 (repeat) | 100 |

The results in Table IV show that the styrene polycarboxylate of the invention keep a significant portion of calcium in solution as opposed to allowing the calcium to precipitate as calcium carbonate. In addition, Table IV shows that the performance of the styrene polycarboxylate of the invention is equivalent to the polymaleic acid polymer (Example 19) which is a popular calcium scale inhibitor.

While the invention has been described with particular reference to certain embodiments thereof, it will be understood that changes and modifications may be made by those of ordinary skill within the scope and spirit of the following claims.

## Claims

1. A method for inhibiting scale formation in wholly or partly aqueous systems under stressed conditions characterized by a Langelier Saturation Index value of greater than 2.5, or a Ryznar Stability Index value of less than 4.5, said method comprising adding to the aqueous system a styrene polycarboxylate, said styrene polycarboxylate is prepared by solution polymerizing: (i) 1 to 60 mole percent of a monomer selected from the group consisting of styrene; substituted-styrene, preferably 3-methyl styrene, 4-propyl styrene, t-butyl styrene, 4-cyclohexyl styrene, 4-dodecyl styrene, 2-ethyl-4-benzyl styrene, 4-(phenylbutyl) styrene, 3-isopropenyl-α, α-dimethylbenzyl isocyanate, halogenated styrenes, sulfonated styrene, and vinyl toluene; and combinations thereof, (ii) 20 to 80 mole percent of a monocarboxylic acid monomer, preferably acrylic acid, and (iii) 30 to 80 mole percent of a dicarboxylic acid monomer, preferably maleic acid, maleic anhydride, itaconic anhydride, fumaric acid, and combinations thereof, in the presence of a water-miscible solvent to form a styrene polycarboxylate solution containing acid moieties, wherein the mole percents are based on the total moles of monomer used to prepare the styrene polycarboxylate.

2. The method according to Claim 1 wherein the styrene polycarboxylate is prepared from styrene, maleic acid, and acrylic acid.

3. The method according to Claims 1 or 2 wherein the styrene or substituted-styrene monomer is present in an amount of from 2 to 40 mole percent, preferably from 5 to 10 mole percent; the monocarboxylic acid is present in an amount of 40 to 70 mole percent, preferably from 35 to 45 mole percent; and the dicarboxylic acid monomer is present in an amount of 35 to 75 mole percent, preferably from 40 to 60 mole percent

4. The method according to Claims 1-3 further comprising an ethylenically unsaturated monomer selected from the group consisting of vinyl acetate, vinyl formate, vinyl propionate, vinyl butyrate, vinyl isobutyrate, vinyl valerate, vinyl 2-ethyl-hexanoate, vinyl isooctanoate, vinyl nonanoate, vinyl decanoate, vinyl pivalate, and vinyl versatate, methyl acrylate, methyl methacrylate, ethyl acrylate, ethyl methacrylate, propyl acrylate, butyl acrylate, pentyl acrylate, hexyl acrylate, 2-ethyl hexyl acrylate, 1-vinyl naphthalene, 2-vinyl naphthalene, acrylamide, N, N-dimethylacrylamide, N-octyl acrylamide, N-methylol acrylamide, dimethylaminoethylacrylate, vinyl pyrrolidone, vinyl imidazolidone, vinyl pyridine, 2-acrylamido-2-methyl propane sulfonic acid, sodium methallyl sufonate, sodium vinyl sulfonate, sulfonated sytrene, N-vinyl formamide, N-vinyl acetamide, and combinations thereof.

5. The method according to Claim 1-4 wherein the water-miscible solvent is selected from the group consisting of methanol, ethanol, propanol, isopropanol, dimethyl ether, ethyl acetate, acetone, methyl ethyl ketone, and combinations thereof, preferably as a mixture of isopropanol and water.

6. The method according to Claims 1-5 wherein the styrene polycarboxylate has a molecular weight of from 500 to 10,000.
